# EUROPÄISCHE PATENTSCHRIFT

(11) **EP 0 820 552 B1**
(45) Veröffentlichungstag und Bekanntmachung des Hinweises auf die Patenterteilung: **07.06.2000**
(21) Anmeldenummer: 95936427.4
(22) Anmeldetag: 04.11.1995
(51) Int. Cl.: E04C 2/54, F24J 2/46

(54) **AUSSENWANDELEMENT FÜR GEBÄUDE**
OUTER WALL ELEMENT FOR BUILDINGS
ELEMENT DE FA ADE DE BATIMENTS

(30) Priorität: 08.04.1995 DE 19513373
(43) Veröffentlichungstag der Anmeldung: 28.01.1998
(73) Patentinhaber: NORSK HYDRO ASA, 0257 Oslo 2 (NO)
(72) Erfinder: SCHULZ, Harald, D-86381 Krumbach (DE)
(74) Vertreter: Dziewior, Joachim
(86) Internationale Anmeldenummer: DE9501550
(87) Internationale Veröffentlichungsnummer: WO9632550

(56) Entgegenhaltungen:
- DE-A- 4 236 603
- FR-A- 2 626 028
- US-A- 4 178 909

## Beschreibung

Die Erfindung betrifft ein Außenwandelement für Gebäude, wobei zur Nutzung von Solarenergie zwischen einer innenseitigen Wandschale und einer für Solarstrahlung durchlässigen außenseitigen Wandschale eine an letztere angrenzende, ebenfalls für Solarstrahlung durchlässige äußere Wärmedämmschicht angeordnet und diese durch eine aus der äußeren Wärmedämmschicht Solarstrahlung absorbierende Grenzfläche von einer zur innenseitigen Wandschale gehörenden inneren Wärmedämmschicht getrennt ist, und wobei mindestens die innenseitige Wandschale mit randseitigen, mindestens bis zur Grenzfläche reichenden und die Wärme zur Wandinnenseite hin leitenden Einfassungsteilen, wie Teilen eines Rahmens, eines Paneelblechs oder dergl., versehen ist.

Außenwandelemente dieser Art sind aus EP 0 250 691 A1 US 4 178 909 und FR 2 626 028 bekannt. Ihr Wandaufbau hat zur Folge, daß bei Nutzung der Solarenergie in der äußeren Wärmedämmschicht und an der Grenzfläche zur inneren Wärmedämmschicht hohe Temperaturen auftreten, die wegen der bis zur Grenzfläche reichenden Einfassungsteile der innenseitigen Wandschale zu Problemen führen können, sei es im Hinblick auf eine unzureichende Temperaturbeständigkeit der Werkstoffe oder wegen einer zu guten Wärmeleitung durch die Einfassungsteile zum Innenraum hin.

Der Erfindung liegt die Aufgabe zugrunde, ein Außenwandelement der eingangs genannten Art so auszubilden, daß die Einfassungsteile, insbesondere die der innenseitigen Wandschale vor den im Inneren des Wandaufbaus auftretenden hohen Temperaturen geschützt sind.

Diese Aufgabe wird nach der Erfindung bei einem Außenwandelement mit den Merkmalen des Anspruchs 1 gelöst.

Die erfindungsgemäß vorgesehenen Isolierteile schirmen die Einfassungsteile von den hohen Temperaturen in der äußeren Wärmedämmschicht und an der Grenzfläche zur inneren Wärmedämmschicht ab, so daß die Einfassungsteile diese hohen Temperaturen nicht annehmen, also auch keine zu hohe Wärmeleitung zum Innenraum hin ergeben können, und Einfassungsteile, insbesondere Rahmenteile, die die hohen Temperaturen nicht vertragen, wie Wärmedämmstege, Dichtleisten, usw. geschützt sind. Dabei ist der Randstreifen, längs dem die Isolierteile die innere Wärmedämmschicht in der Grenzfläche überdecken, so breit, daß sich kein zu großer Wärmefluß quer über den Randstreifen zu den Einfassungsteilen ergeben kann. Dabei empfiehlt es sich aber, die Isolierteile zur Nutzung der Solarenergie beitragen zu lassen und dazu die Anordnung so zu treffen, daß die an der absorbierenden Grenzfläche aufgenommene Solarenergie nicht nur allein durch die innere Wärmedämmschicht, sondern in angemessenem Umfang auch durch die Isolierteile und die Einfassungsteile hindurch zu der den Wandaufbau auf der Seite des Innenraums begrenzenden Wandoberfläche fließen kann. Dazu sind die Isolierteile in ihrem Wärmeleitungsverhalten vorzugsweise so bemessen, daß der Wärmefluß durch die Isolierteile und die Einfassungsteile hindurch an der die Einfassungsteile zum Innenraum hin begrenzenden Oberfläche im wesentlichen die gleiche Oberflächentemperatur ergibt, wie sie die entsprechende Oberfläche der innenseitigen Wandschale besitzt.

Eine bevorzugte Ausführungsform ist dadurch gekennzeichnet, daß die Isolierteile die äußere Wärmedämmschicht randseitig über deren gesamte Dicke begrenzen und außer einerseits an der inneren Wärmedämmschicht auch andererseits an der außenseitigen Wandschale anliegen. Die Isolierteile umgrenzen dann ringsum die äußere Wärmedämmschicht und schützen damit den außerhalb der Isolierteile befindlichen Wandaufbau vor zu starker Temperaturbeanspruchung. Zweckmäßigerweise verläuft die der äußeren Wärmedämmschicht zugekehrte Fläche der Isolierteile schräg gegen die Ebene der außenseitigen Wandschale, so daß die von den Isolierteilen begrenzte Fläche der äußeren Wärmedämmschicht an der Innenfläche der außenseitigen Wandschale größer ist als an der Grenzfläche zur inneren Wärmedämmschicht. Der Vorteil dieser Anordnung ist darin zu sehen, daß die Abdeckung der außenseitigen Wandschale durch die Isolierteile möglichst gering ist und daher die für den Durchlaß der Solarenergie zur Verfügung stehende Fläche der außenseitigen Wandschale durch die Isolierteile wenig beeinträchtigt wird.

Im einzelnen empfiehlt es sich, die Anordnung so zu treffen, daß die außenseitige Wandschale und die Einfassungsteile der innenseitigen Wandschale durch Distanzteile verbunden sind, die der außenseitigen Wandschale auf der Seite der äußeren Wärmedämmschicht anliegen, und daß die Isolierteile zwischen der äußeren Wärmedämmschicht und den Distanzteilen angeordnet sind und die Distanzteile überdecken. Dann sind auch die Distanzteile in den durch die Isolierteile bewirkten Temperaturschutz eingeschlossen. Insbesondere besteht dabei die vorteilhafte Möglichkeit, die Distanzteile und die Isolierteile einstückig miteinander auszubilden.

Ob aber die Distanzteile und Isolierteile nun ein- oder mehrstückig ausgebildet sind, in jedem Fall können die Distanzteile einerseits ein Dichtprofil zur Anlage an der außenseitigen Wandschale und andererseits ein Verankerungsprofil zum Anschluß an die Einfassungsteile der innenseitigen Wandschale aufweisen. Alternativ besteht die Möglichkeit, daß die Distanzteile als Abstandshalter ausgebildet und einerseits mit der außenseitigen Wandschale, andererseits mit den Einfassungsteilen verklebt oder in anderer geeigneter Weise stoffschlüssig verbunden sind.

Soweit die Einfassungsteile der innenseitigen Wandschale über die Grenzfläche gegen die außenseitige Wandschale vorstehen, können die Einfassungsteile im vorstehenden Bereich eine Auflage für die Isolierteile bilden.

Im übrigen empfiehlt es sich, im Zusammenhang mit den Isolierteilen Durchgänge zur Druckentspannung der äußeren Wärmedämmschicht nach außen vorzusehen.

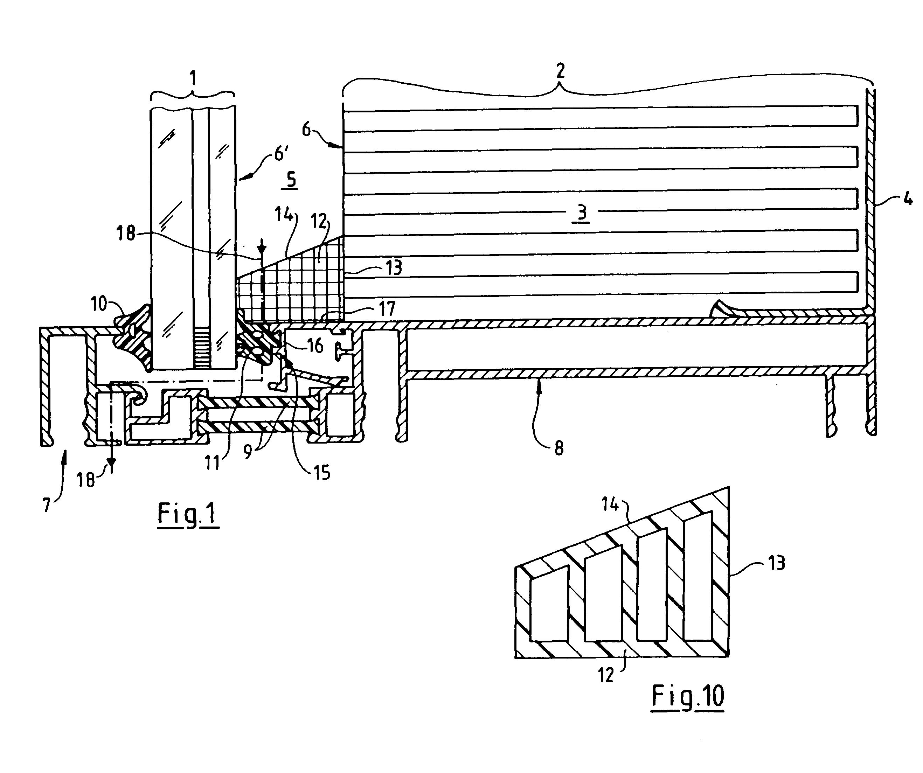

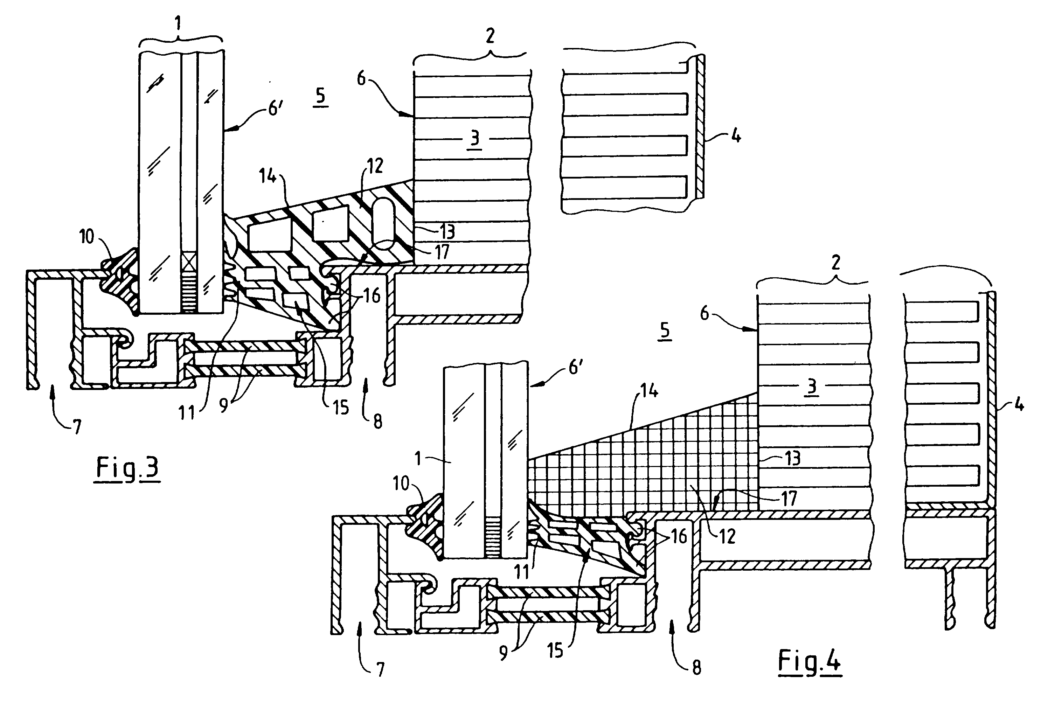

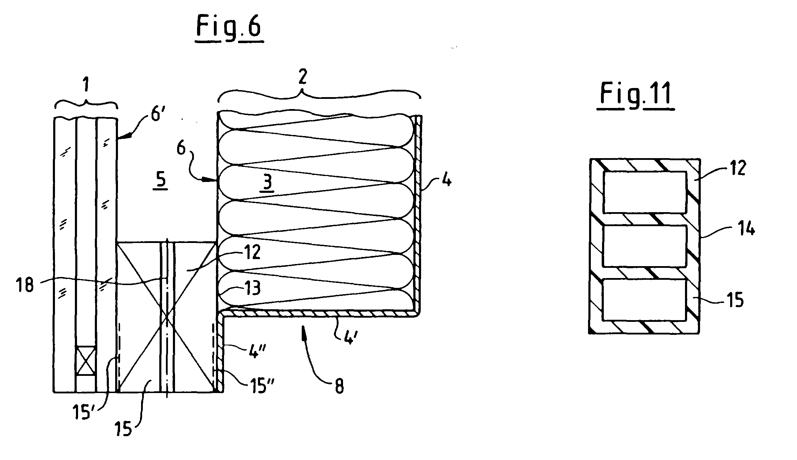

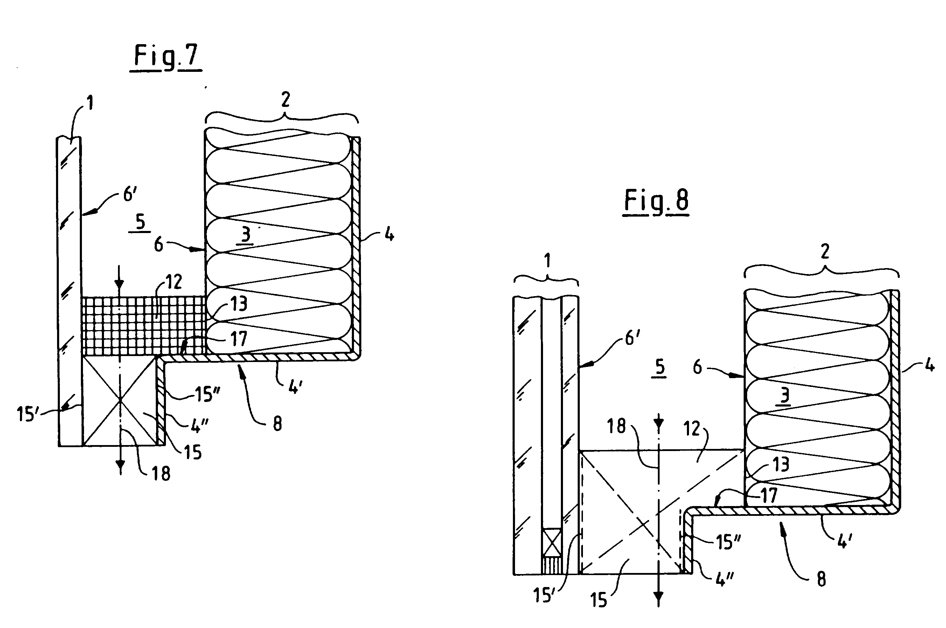

Im folgenden wird die Erfindung an in der Zeichnung dargestellten Ausführungsbeispielen näher erläutert. Die Fig. 1 bis 9 zeigen verschiedene Ausführungsformen des erfindungsgemäßen Außenwandelements in jeweils einem Querschnitt durch den Randbereich des Elements; die Fig. 10 und 11 zeigen einen Querschnitt durch die Isolierteile der Ausführungsform nach Fig. 1 bzw. Fig. 6 in vergrößerter Darstellung.

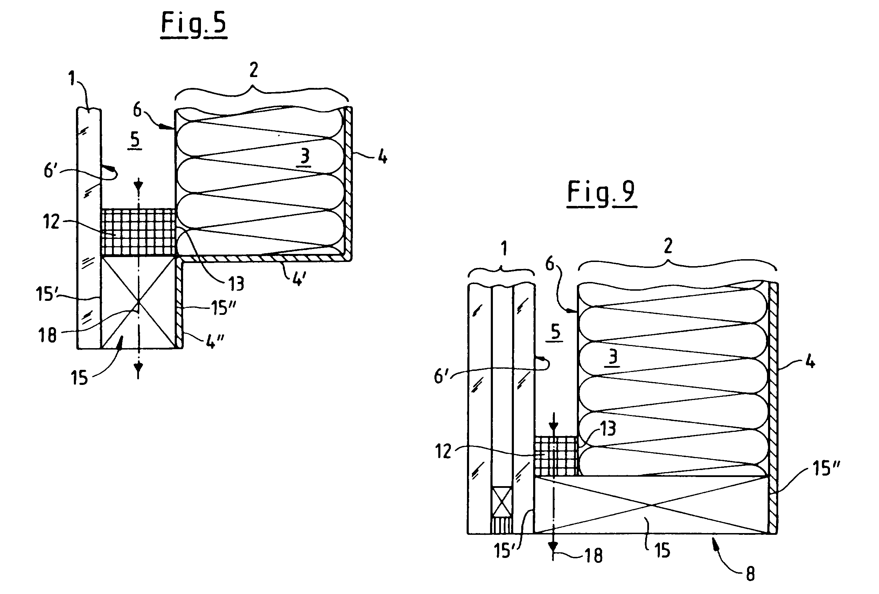

In der Zeichnung ist die außenseitige Wandschale mit 1 bezeichnet. Sie kann als Scheibe aus voll vorgespanntem Glas (ESG) oder teilvorgespanntem Glas (TVG) als Einfach-, Zweifach- oder Dreifachglasscheibe ausgebildet sein, wobei im übrigen Wärmeschutz- und/oder Sonnenschutzbeschichtungen sowie den g-Wert (Gesamtenergiedurchlaßgrad) verändernde Beschichtungen, wie z. B. Siebdruckbeschichtungen, vorhanden sein können, die aber hier im einzelnen nicht weiter beschrieben zu werden brauchen. Zu dem in den Figuren jeweils auf der rechten Seite liegenden Innenraum hin besitzt das Außenwandelement eine innenseitige Wandschale 2, zu der eine innere Wärmedämmschicht 3 gehört, die auf der Innenraumseite durch eine weitgehend dampfdichte Wandschicht 4, beispielsweise ein Blech, aber auch eine Betonwand, abgeschlossen sein kann. An die außenseitige Wandschale 1 schließt sich in Richtung zum Innenraum hin eine äußere Wärmedämmschicht 5 an, die wie die außenseitige Wandschale 1 ebenfalls für die Solarstrahlung durchlässig ist und die in allen Ausführungsbeispielen als Luftschicht angenommen ist, aber auch alternativ Aerogele, Gläser, transparente Kunsststoffe, Kapillarplatten, usw. enthalten kann. Diese äußere Wärmedämmschicht 5 ist von der inneren Wärmedämmschicht 3 durch eine Grenzfläche 6 getrennt, an der Solarstrahlung aus der äußeren Wärmedämmschicht 5 absorbiert wird. Dieser Wandaufbau ist mit einer Einfassung versehen, die äußere Einfassungsteile 7 an der außenseitigen Wandschale 1 besitzen kann und Einfassungsteile 8 an der inneren Wandschale 2 aufweist, die in der Regel aus Metall bestehen und daher die Wärme in Richtung zum Innenraum hin, in den Figuren also nach rechts, gut leiten. Die Einfassung kann von einem Rahmen, wie in den Fig. 1 bis 4, oder von einem Paneelblech, wie in den Fig. 5 bis 9, gebildet sein. Die Einfassungsteile 8 sind im Fall vorhandener äußerer Einfassungsteile 7 (Fig. 1 bis 4) mit letzteren durch die Wärme schlecht leitende Brückenteile 9 verbunden. Im übrigen sind die äußeren Einfassungsteile 7 gegen die äußere Wandschale 1 durch äußere Dichtungen 10 und die Einfassungsteile 8 durch innere Dichtungen 11 abgedichtet. Bei Solareinstrahlung entstehen in der äußeren Wärmedämmschicht 5 und insbesondere an deren Grenzfläche 6 zur inneren Wärmedämmschicht 2 wie auch an ihrer Grenzfläche 6' zur außenseitigen Wandschale 1 besonders hohe Temperaturen. Um die Einfassung, insbesondere die Einfassungsteile 8 an der innenseitigen Wandschale 1 und die inneren Dichtungen 11 von diesen hohen Temperaturen abzuschirmen und vor ihnen zu schützen, sind die äußere Wärmedämmschicht 5 und die Einfassungsteile 8 voneinander durch die Wärme schlecht leitende Isolierteile 12 getrennt, die von den Einfassungsteilen 8 aus die innere Wärmedämmschicht 5 längs eines in der Grenzfläche 6 liegenden Randstreifens 13 abdecken, der ausreichend breit ist, daß über den Randstreifen kein zu großer Wärmefluß aus der äußeren Wärmedämmschicht 5 in die Einfassungsteile 8 der innenseitigen Wandschale 2 stattfinden kann. Im einzelnen sind die Isolierteile 12 in ihrem Wärmeleitungsverhalten so bemessen, daß der Wärmeleitungsfluß durch die Isolierteile 12 und durch die Einfassungsteile 8 hindurch an der die Einfassungsteile 8 zum Innenraum hin begrenzenden Oberfläche im wesentlichen die gleiche Temperatur ergibt, wie die entsprechende Oberfläche der innenseitigen Wandschale 2, insbesondere also der Wandschicht 4 besitzt. Auf diese Weise bleiben die Isolierteile 12 ohne Beeinträchtigung der Solarenergienutzung.

In den Ausführungsbeispielen begrenzen die Isolierteile 12 die äußere Wärmedämmschicht 5 randseitig ringsum und über deren gesamte Dicke, so daß die Isolierteile 12 nicht nur einerseits an der inneren Wärmedämmschicht 3, sondern auch andererseits an der Innenfläche 6' der außenseitigen Wandschale 1 anliegen. Dabei verläuft die der äußeren Wärmedämmschicht 5 zugekehrte Fläche 14 der Isolierteile 12 in den Fig. 1 bis 4 schräg gegen die Ebene der außenseitigen Wandschale 1, nämlich so, daß die von den Isolierteilen 12 begrenzte Fläche der äußeren Wärmedämmschicht 5 an der Innenfläche 6' der außenseitigen Wandschale 1 größer ist als an der Grenzfläche 6 zur inneren Wärmedämmschicht 3 und dadurch die für den Solarstrahlungsdurchtritt freie Fläche der außenseitigen Wandschale 1 durch die Isolierteile 12 möglichst wenig beeinträchtigt wird.

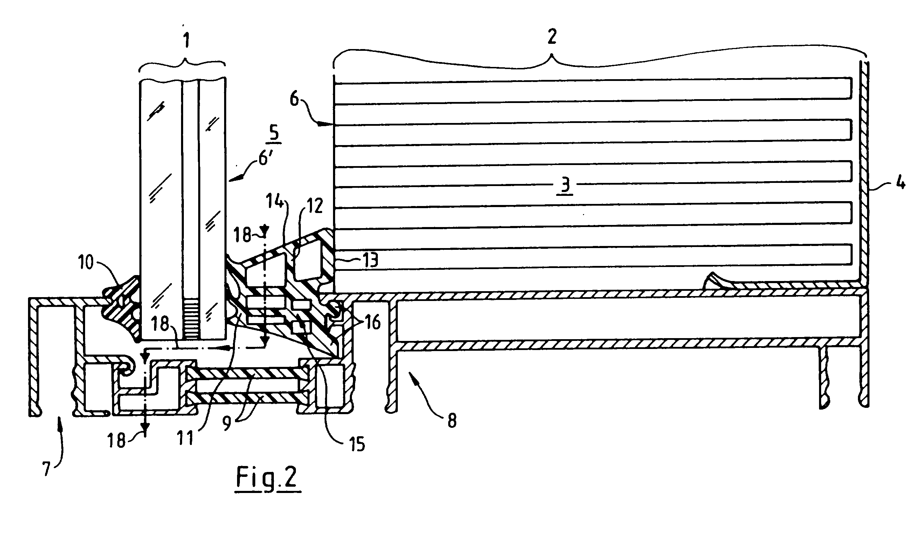

In allen Ausführungsbeispielen sind die außenseitige Wandschale 1 und die Einfassungsteile 8 der innenseitigen Wandschale 2 direkt durch Distanzteile 15 verbunden, die der außenseitigen Wandschale 1 auf der Seite der äußeren Wärmedämmschicht 5 anliegen, wobei die Isolierteile 12 zwischen der äußeren Wärmedämmschicht 5 und diesen Distanzteilen 15 angeordnet sind und die Distanzteile 15 überdecken, also auch die Distanzteile 15 vor zu hohen Temperaturbeanspruchungen schützen. Die Distanzteile 15 und die Isolierteile 12 können einstückig miteinander ausgebildet sein, wie dies die Fig. 2, 3, 6 und 8 zeigen. Die Distanzteile 15 können von den Isolierteilen 12 aber auch getrennt ausgebildet sein, wie dies in den Fig. 1, 4, 5, 7 und 9 gezeigt ist. Im Ausführungsbeispiel nach den Fig. 1 bis 4 sind die Distanzteile 15 einerseits mit dem inneren Dichtprofil 11 zur Anlage an der außenseitigen Wandschale 1 und andererseits mit einem Verankerungsprofil 16 zum Anschluß an die Einfassungsteile 8 versehen. In den Ausführungsbeispielen nach den Fig. 5 bis 9, die Wandpaneele zeigen, sind die Distanzteile 15 als Abstandhalter ausgebildet, die einerseits mit der außenseitigen Wandschale 1 in der Klebfläche 15', andererseits in der Klebfläche 15" mit den Einfassungsteilen 8 verklebt sind, wobei die Fig. 5 bis 8 Paneele mit eingezogenem Rand zeigen, dessen Blechschenkel 4', 4" die der innenseitigen Wandschale 2 zugeordneten Einfassungsteile 8 bilden. Im Ausführungsbeispiel eines Paneels mit nicht eingezogenem Rand gemäß Fig. 9 bilden die Einfassungsteile 8 unmittelbar die Distanzteile 15, wobei das Distanzteil 15 außer in der Fläche 15' mit der Innenseite 6' der außenseitigen Wandschale 1 direkt mit dem rückwärtigen Abschlußblech 4 der innenseitigen Wandschale 1 in der Fläche 15" verklebt ist. Soweit die Dicke der inneren Wärmedämmschicht 3 geringer oder die der äußeren Wärmedämmschicht 5 größer ist, so daß die der innenseitigen Wandschale 2 zugeordneten Einfassungsteile 8 über die Grenzfläche 6 gegen die außenseitige Wandschale 1 vorstehen, wie in den Fig. 1, 3, 4, 7 und 8, können die Einfassungsteile 8 mit diesem vorstehenden Bereich eine Auflage 17 für die Isolierteile 12 bilden. Die Isolierteile 12 können als Rahmen zwischen der außenseitigen Wandschale 1 und der inneren Wärmedämmschicht 3 eingeklemmt und/oder mit ihnen wie auch mit den vorstehenden Bereichen 17 der Einfassungsteile 8 verklebt oder auf andere geeignete Weise verbunden sein. Die Isolierteile 12 können als Hohlkammerprofile ausgebildet sein, wie dies die Fig. 10 und 11 zeigen. Im übrigen empfiehlt es sich, im Zusammenhang mit den Isolierteilen 12 dafür zu sorgen, daß die äußere Wärmedämmschicht 5 zur Druckentspannung über geeignete Durchgänge nach außen mit dem Außenraum verbunden ist, was in der Zeichnung jeweils durch strichpunktierte Linienführung 18 angedeutet ist. Die Isolierteile 12 sollten aus einem gut wärmedämmenden und ausreichend temperaturbeständigen Werkstoff bestehen, wie Mineralfaserstreifen, org. Schaumstreifen, PUR, Silikonoder Melaminharzschaumstreifen, aber auch in massiver oder gelochter Form möglich. Der Werkstoff kann auch starr sein. Für die Abstandshalter 15 empfehlen sich Werkstoffe wie Holz, Thermax, Polyamid, Silikon.

## Patentansprüche

1. Außenwandelement für Gebäude, wobei zur Nutzung von Solarenergie zwischen einer innenseitigen Wandschale (2) und einer für Solarstrahlung durchlässigen außenseitigen Wandschale (1) eine an letztere angrenzende, ebenfalls für Solarstrahlung durchlässige äußere Wärmedämmschicht (5) angeordnet und diese durch eine aus der äußeren Wärmedämmschicht (5) Solarstrahlung absorbierende Grenzfläche (6) von einer zur innenseitigen Wandschale (2) gehörenden inneren Wärmedämmschicht (3) getrennt ist, und wobei mindestens die innenseitige Wandschale (2) mit randseitigen, quer von der Innenseite zur Außenseite verlaufenden, mindestens bis zur Grenzfläche (6) reichenden und die Wärme zur Wandinnenseite hin leitenden Einfassungsteilen (8), wie Teilen eines Rahmens, eines Paneelbleches oder dergl., versehen ist, dadurch gekennzeichnet, daß die äußere Wärmedämmschicht (5) und die Einfassungsteile (8) voneinander durch die Wärme schlecht leitende Isolierteile (12) getrennt sind, die von den Einfassungsteilen (8) aus die innere Wärmedämmschicht (3) längs eines in der Grenzfläche (6) liegenden Randstreifens (13) abdecken.

2. Außenwandelement nach Anspruch 1, dadurch gekennzeichnet, daß die Ioslierteile (12) in ihrem Wärmeleitungsverhalten so bemessen sind, daß der Wärmefluß durch die Isolierteile (12) und durch die Einfassungsteile (8) hindurch an der die Einfassungsteile (8) zum Innenraum hin begrenzenden Oberfläche etwa die gleiche Temperatur ergibt, wie sie die entsprechende Oberfläche der innenseitigen Wandschale (2) besitzt.

3. Außenwandelement nach Anspruch 1 oder 2, dadurch gekennzeichnet, daß die Isolierteile (12) die äußere Wärmedämmschicht (5) randseitig über deren gesamte Dicke begrenzen und außer einerseits an der inneren Wärmedämmschicht (3) auch andererseits an der außenseitigen Wandschale (1) anliegen.

4. Außenwandelement nach Anspruch 3, dadurch gekennzeichnet, daß die der äußeren Wärmedämmschicht (5) zugekehrte Fläche (14) der Isolierteile (12) schräg gegen die Ebene der außenseitigen Wandschale (1) verläuft, so daß die von den Isolierteilen (12) begrenzte Fläche der äußeren Wärmedämmschicht (5) an der Innenfläche (6') der außenseitigen Wandschale (1) größer ist als an der Grenzfläche (6) zur inneren Wärmedämmschicht (3).

5. Außenwandelement nach Anspruch 3 oder 4, dadurch gekennzeichnet, daß die außenseitige Wandschale (1) und die Einfassungsteile (8) der innenseitigen Wandschale (2) durch Distanzteile (15) verbunden sind, die der außenseitigen Wandschale (1) auf der Seite der äußeren Wärmedämmschicht (5) anliegen, und daß die Isolierteile (12) zwischen der äußeren Wärmedämmschicht (5) und den Distanzteilen (15) angeordnet sind und die Distanzteile (15) überdecken.

6. Außenwandelement nach Anspruch 5, dadurch gekennzeichnet, daß die Distanzteile (15) und die Isolierteile (12) einstückig miteinander ausgebildet sind.

7. Außenwandelement nach Anspruch 5 oder 6, dadurch gekennzeichnet, daß die Distanzteile (15) einerseits ein Dichtprofil (11) zur Anlage an der außenseitigen Wandschale (1) und andererseits ein Verankerungsprofil (16) zum Anschluß an die Einfassungsteile (8) aufweisen.

8. Außenwandelement nach Anspruch 5 oder 6, dadurch gekennzeichnet, daß die Distanzteile (15) als Abstandshalter ausgebildet und einerseits mit der außenseitigen Wandschale (1), andererseits mit den Einfassungsteilen (8) verklebt sind.

9. Außenwandelement nach einem der Ansprüche 1 bis 8, dadurch gekennzeichnet, daß die Einfassungsteile (8) der innenseitigen Wandschale (2) über die Grenzfläche (6) gegen die außenseitige Wandschale (1) vorstehen und im vorstehenden Bereich (17) eine Auflage für die Isolierteile (12) bilden.

10. Außenwandelement nach einem der Ansprüche 1 bis 9, dadurch gekennzeichnet, daß die Isolierteile (12) Durchgänge zur Druckentspannung der äußeren Wärmedämmschicht (5) nach außen bilden.

## Claims

1. An outside wall element for buildings, wherein to use solar energy arranged between an internal wall shell (2) and an external wall shell (1) which is transmissive for solar radiation is an outer heat insulating layer (5) which adjoins the external wall shell (1) and which is also transmissive for solar radiation and the outer heat insulating layer (5) is separated from an inner heat insulating layer (3) belonging to the internal wall shell (2) by a boundary surface (6) absorbing solar radiation from the outer heat insulating layer (5), and wherein at least the internal wall shell (2) is provided with enclosing portions (8) such as parts of a frame, a sheet panel or the like, which enclosing portions are disposed at the edge and extend transversely from the inside to the outside and which extend at least as far as the boundary surface (6) and conduct the heat to the inside of the wall, characterised in that the outer heat insulating layer (5) and the enclosing portions (8) are separated from each other by insulating portions (12) which are poor thermal conductors and which from the enclosing portions (8) cover over the inner heat insulating layer (3) along an edge strip (13) which is in the boundary surface (6).

2. An outside wall element according to claim 1 characterised in that the insulating portions (12) are so rated in terms of their heat conduction characteristics that the flow of heat through the insulating portions (12) and through the enclosing portions (8) gives at the surface delimiting the enclosing portions (8) towards the interior approximately the same temperature as that of the corresponding surface of the internal wall shell (2).

3. An outside wall element according to claim 1 or claim 2 characterised in that the insulating portions (12) define the outer heat insulating layer (5) at the edge over the entire thickness thereof and besides bearing on the one hand against the inner heat insulating layer (3) they also bear on the other hand against the external wall shell (1).

4. An outside wall element according to claim 3 characterised in that the surface (14) of the insulating portions (12), which is towards the outer heat insulating layer (5), extends inclinedly relative to the plane of the external wall shell (1), so that the surface area of the outer heat insulating layer (5), which is defined by the insulating portions (12), is greater at the inside surface (6') of the external wall element (1) than at the boundary surface (6) in relation to the inner heat insulating layer (3).

5. An outside wall element according to claim 3 or claim 4 characterised in that the external wall shell (1) and the enclosing portions (8) of the internal wall shell (2) are connected by distance portions (15) which bear against the external wall shell (1) on the side of the outer heat insulating layer (5), and that the insulating portions (12) are arranged between the outer heat insulating layer (5) and the distance portions (15) and cover over the distance portions (15).

6. An outside wall element according to claim 5 characterised in that the distance portions (15) and the insulating portions (12) are formed in one piece with each other.

7. An outside wall element according to claim 5 or claim 6 characterised in that the distance portions (15) have on the one hand a sealing profile (11) for bearing against the external wall shell (1) and on the other hand an anchoring profile (16) for connection to the enclosing portions (8).

8. An outside wall element according to claim 5 or claim 6 characterised in that the distance portions (15) are in the form of spacers and are glued on the one hand to the external wall shell (1) and on the other hand to the enclosing portions (8).

9. An outside wall element according to one of claims 1 to 8 characterised in that the enclosing portions (8) of the internal wall shell (2) project beyond the boundary surface (6) towards the external wall shell (1) and in the projecting region (17) form a support for the insulating portions (12).

10. An outside wall element according to one of claims 1 to 9 characterised in that the insulating portions (12) form passages for pressure relief of the outer heat insulating layer (5) to the exterior.

## Revendications

1. Elément de paroi extérieure pour bâtiments, dans lequel pour utiliser l'énergie solaire, il est prévu, entre un parement intérieur (2) et un parement extérieur (1) perméable au rayonnement solaire, une couche thermiquement isolante (5) extérieure qui est contiguë au parement extérieur, est également perméable au rayonnement solaire et est séparée d'une couche thermiquement isolante (3) intérieure faisant partie du parement intérieur (2) par une interface (6) qui absorbe le rayonnement solaire provenant de la couche thermiquement isolante (5), au moins le parement intérieur (2) étant pourvu d'éléments d'encadrement (8) périphériques, tels qu'un cadre, des panneaux de tôle ou similaires, qui s'étendent transversalement de l'intérieur vers l'extérieur au moins jusqu'à l'interface (6) et conduisent la chaleur vers la face intérieure de la paroi, caractérisé par le fait que la couche thermiquement isolante (5) extérieure et les éléments d'encadrement (8) sont séparés les uns des autres par des éléments isolants (12) mauvais conducteurs de la chaleur, qui couvrent la couche thermiquement isolante (3) intérieure à partir des éléments d'encadrement (8), le long d'une bande de bord (13) située dans l'interface (6).

2. Elément de paroi extérieure selon la revendication 1, caractérisé par le fait que les éléments isolants (12), sur le plan de leur conduction thermique, sont calculés de telle sorte que le flux de chaleur à travers les éléments isolants (12) et à travers les éléments d'encadrement (8) donne, au niveau de la surface tournée vers l'espace intérieur, sensiblement la même température que celle de la surface associée du parement intérieur (2).

3. Elément de paroi extérieure selon la revendication 1 ou 2, caractérisé par le fait que les éléments isolants (12) délimitent la couche thermiquement isolante côté bord, sur toute son épaisseur, et en outre sont en contact d'une part avec la couche thermiquement isolante (3) intérieure et d'autre part avec le parement extérieur (1).

4. Elément de paroi extérieure selon la revendication 3, caractérisé par le fait que la surface (14) des éléments isolants (12) tournée vers la couche thermiquement isolante (5) extérieure est inclinée par rapport au plan du parement extérieur (1), de sorte que la surface de la couche thermiquement isolante (5) extérieure délimitée par les éléments isolants (12), côté surface intérieure (6') du parement extérieur (1) est plus grande qu'au niveau de l'interface (6) avec la couche thermiquement isolante intérieure (3).

5. Elément de paroi extérieure selon la revendication 3 ou 4, caractérisé par le fait que le parement extérieur (1) et les éléments d'encadrement (8) du parement (2) intérieur sont liés par des éléments d'espacement (15) qui sont en contact avec le parement extérieur (1) côté couche thermiquement isolante (5) extérieure et par le fait que les éléments isolants (12) sont disposés entre la couche thermiquement isolante (5) extérieure et les éléments d'espacement (15) et couvrent lesdits éléments d'espacement (15).

6. Elément de paroi extérieure selon la revendication 5, caractérisé par le fait que les éléments d'espacement (15) et les éléments isolants (12) forment une ensemble monobloc.

7. Elément de paroi extérieure selon la revendication 5 ou 6, caractérisé par le fait que les éléments d'espacement (15) comportent d'une part un profilé d'étanchéité (11) qui s'applique sur le parement extérieur (1) et d'autre part un profilé d'ancrage (16) pour la liaison avec les éléments d'encadrement (8).

8. Elément de paroi extérieure selon la revendication 5, caractérisé par le fait que les éléments d'espacement (15) sont conformés en entretoises et sont collés d'un côté au parement extérieur (1) et de l'autre aux éléments d'encadrement (8).

9. Elément de paroi extérieure selon une des revendications 1 à 8, caractérisé par le fait que les éléments d'encadrement (8) du parement intérieur (2) font saillie au-delà de l'interface (6) par rapport au parement extérieur (1) et, dans la zone saillante (17), forment un appui pour les éléments isolants (12).

10. Élément de paroi extérieure selon une des revendications 1 à 9, caractérisé par le fait que les éléments isolants (12) forment des passages ouverts sur l'extérieur pour le relâchement de la pression dans la couche thermiquement isolante (5) extérieure.
